# EUROPEAN PATENT SPECIFICATION

(11) **EP 2 857 092 B1**
(45) Date of publication and mention of the grant of the patent: **12.04.2017**
(21) Application number: 12878541.7
(22) Date of filing: 04.06.2012
(51) Int. Cl.: F16H 1/22, B01F 7/00, B01F 7/04, B01F 13/08, A21C 1/06, B29B 7/48, B29B 7/58

(54) **KNEADING MACHINE**
KNETMASCHINE
PÉTRIN

(43) Date of publication of application: 08.04.2015
(73) Proprietor: Kurimoto, Ltd., Osaka-shi, Osaka 550-8580 (JP)
(72) Inventor: FUJII Atsushi, Osaka-shi Osaka 550-8580 (JP); YAMASAKI Koji, Osaka-shi Osaka 550-8580 (JP); FUKUMOTO Kazunori, Osaka-shi Osaka 550-8580 (JP)
(74) Representative: Grünecker Patent- und Rechtsanwälte PartG mbB
(86) International application number: PCT/JP2012/064367
(87) International publication number: WO 2013/183100

(56) References cited:
- DE-C1- 4 226 133
- JP-A- H03 127 618
- JP-A- H03 127 618
- JP-A- 2003 336 695
- JP-A- 2003 336 695
- JP-A- 2012 040 523
- JP-B2- 3 744 873
- US-A- 3 618 902
- US-A1- 2002 163 855

## Description

### TECHNICAL FIELD

The present invention relates to a kneading machine according to the preamble of claim 1, as it is known from Patent Document 1.

### BACKGROUND ART

As the machines which knead a raw material such as powder, granules or liquid, kneading machines of the so called two-shaft continuous type as described in Patent Document 1 are known.

This type of kneading machines are so constituted by axially supporting a pair of shafts in parallel in a housing and attaching a number of paddles (agitating blades) and screws to both rotation shafts.

In the housing, a supply port is formed in one end in the longitudinal direction, and a discharge port is formed in the other end thereof. With the rotation of both shafts, the raw material supplied to the housing through the supply port is agitated by the paddles and transferred to the discharge port by the screws, and finally, a kneaded product is discharged from the discharge port.

In case of a raw material which likely leaks, such as a resin solution, is selected, since a high airtightness is required in the housing, shaft seals are used for the shafts.

In case of two-shaft continuous type kneading machines, mechanical seals are generally used as the shaft seals for high vacuum.
Patent Document 2 relates to a multiple shaft motive power transmission device for transmitting motive power from a single input shaft to a pair of output shafts, an inner gear rotatably supported between the input shaft and the output shafts, an input power transmitting mechanism for transmitting the rotation of the input shaft to the inner gear, and an output power transmitting mechanism for transmitting motive power to the output shafts using the inner gear as common drive source. The output power transmitting mechanism is arranged independently so as to mesh with the inner teeth of the inner gear and has the gear of the first output shaft arranged shifted in the axial direction of the cylindrical rotor and the gear of the second output shaft.
Patent Document 3 discloses an epicyclic gear which has a common ring gear driving two parallel adjacent drive shafts. The drive shafts lie in the same plane as the axis of the ring rear and at an equal distance from it. Each drive shaft has its own sun gear in different planes each meshing with two intermediate gears in its own plane. The centres of the intermediate gears lie on lines which go through the centre of the corresponding sun gear and are at right angles to the axis of the ring gear.
Patent Document 4 relates to a rotating processing vessel and a method of using a magnetically coupled agitator which does not penetrate the vessel walls to mix dry or moist powders within the rotating processing vessel.

### PRIOR ART DOCUMENTS

### PATENT DOCUMENTS

Patent Document 1: JP 3744873 B
Patent Document 2: JP 2003 336695
Patent Document 3: DE 42 26 133 C1
Patent Document 4: US 2002/163855 A1

### SUMMARY OF THE INVENTION

### PROBLEMS TO BE SOLVED BY THE INVENTION

However, usually, since mechanical seals have complicated structures, they are costly. In addition, employing mechanical seals makes the whole size of the kneading machine large. Especially in case of a two-shaft kneading machine of self-cleaning type, since the distance between the shafts is restricted within a prescribed range, the type of the seals is limited and a special design is needed in order to keep a high airtightness, so that the cost is further increased.

Further, in case of using mechanical seals, since the administration of the sealant controlling the inner pressure is necessary, the maintenance of the supply circulation apparatus of the sealant is also troublesome and costly.

Accordingly, a problem to be solved by the present invention is to assure the airtightness in the housing of a two-shaft continuous kneading machine by a simple means without using a mechanical seal.

### MEANS FOR SOLVING THE PROBLEM

To solve the above-described problem, the present invention provides the kneading machine according to claim 1. With the kneading machine of the present invention, shafts can be rotated in the state sealed within a housing by forming a magnetic coupling between the mechanism in the housing including the shafts and a carrier which is driven to rotate and is arranged outside the housing.

More particularly, the following constitution is employed for the kneading machine of the present invention. That is, the kneading machine of the present invention comprises a housing in which a supply port is formed in one end in the longitudinal direction thereof and a discharge port is formed in the other end thereof; a pair of shafts rotatably supported in parallel in the longitudinal direction of the housing and sealed in the housing, the shafts having a plurality of paddles and screws aligned in the axial direction on the outer peripheries thereof; and a magnetic coupling mechanism which rotates both the shafts; wherein the magnetic coupling mechanism comprises gear portions provided on the respective shafts so as to be spaced apart from each other in the axial direction; a cylindrical ring gear rotatably supported in the housing so as to cover the axial ends of both the shaft, the ring gear having a gear portion in the inner periphery thereof which meshes with the gear portions of both shafts, and having a magnet portion on the outer periphery thereof; and a cylindrical carrier rotatably supported outside the housing and coaxially with the ring gear, the carrier having a magnetic portion in the inner surface thereof.

### EFFECTS OF THE INVENTION

With the constitution of the kneading machine as described above, upon driving the carrier outside the housing, the ring gear is rotated by the magnetic force between the opposing magnet portions, and then the shafts are rotated by the meshing between the gear portions.

Since a magnetic coupling mechanism is formed between inside and outside of the housing so as to enable the shafts to rotate in the state tightly enclosed within the housing, airtightness is assured by a simple means.

### BRIEF DESCRIPTION OF THE DRAWINGS

Fig. 1 (a) is a longitudinal sectional view of the kneading machine; and Fig. 1 (b) is a sectional view taken along the arrows in Fig. 1 (a).
Fig. 2 is a side view of a power transmission mechanism.
Fig. 3 is an enlarged longitudinal sectional view of a portion of the kneading machine.
Fig. 4 is a sectional view taken along the arrows in Fig. 3.

### MODE FOR CARRYING OUT THE INVENTION

An embodiment of the present invention is now described referring to the drawings.

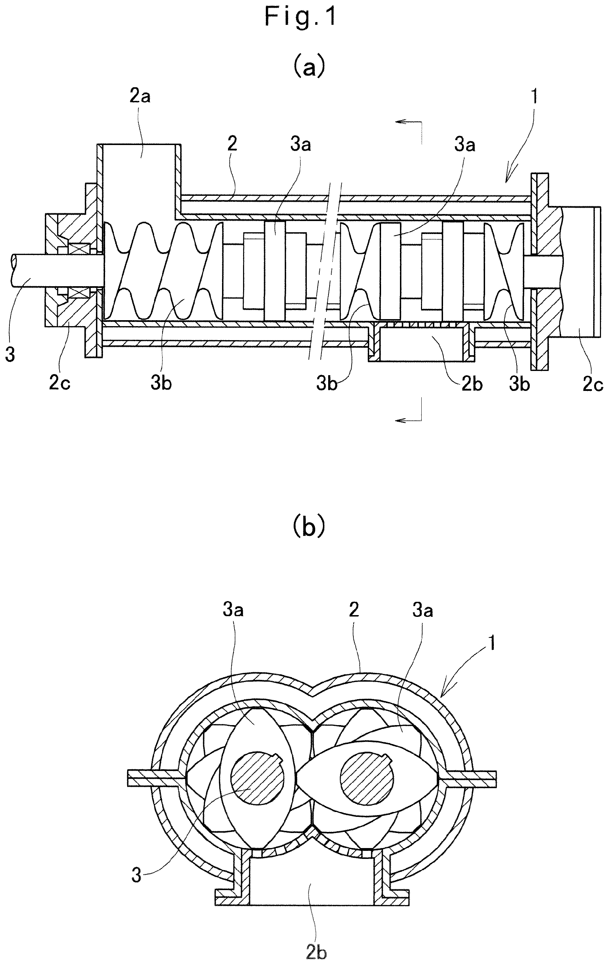

The kneading machine 1 of an embodiment shown in Fig. 1 is suitably used for kneading a raw material which easily leaks and for which airtightness is required, such as a resin polymerized in a solvent or a resin solution required for removing monomers.

As shown, the kneading machine 1 includes a housing 2 and a pair of shafts 3 sealed in the housing 2.

The kneading machine 1 further includes a magnetic coupling mechanism for rotating the shafts 3.

As shown in Fig. 1, in the dual cylindrical housing 2, a supply port 2a of a raw material is formed in the upper portion in one end of the outer peripheral surface thereof, and a discharge port 2b of a kneaded product is formed in the lower portion in the other end of the outer peripheral surface.

Further, on the longitudinal ends of the housing 2, bearing boxes 2c in which bearings are incorporated are mounted.

The rotatable shafts 3 are arranged within the respective cylinders of the dual cylindrical housing 2 along the longitudinal direction, and arranged in parallel with each other.

Each rotatable shaft 3 is rotatably supported on bearings 2d in the bearing boxes 2c at both ends of the housing 2, and a plurality of paddles 3a and screws 3b aligned along the axial direction are attached to the outer periphery thereof. Oil seals 2e are provided between each of the bearing boxes 2c and the respective shafts 3.

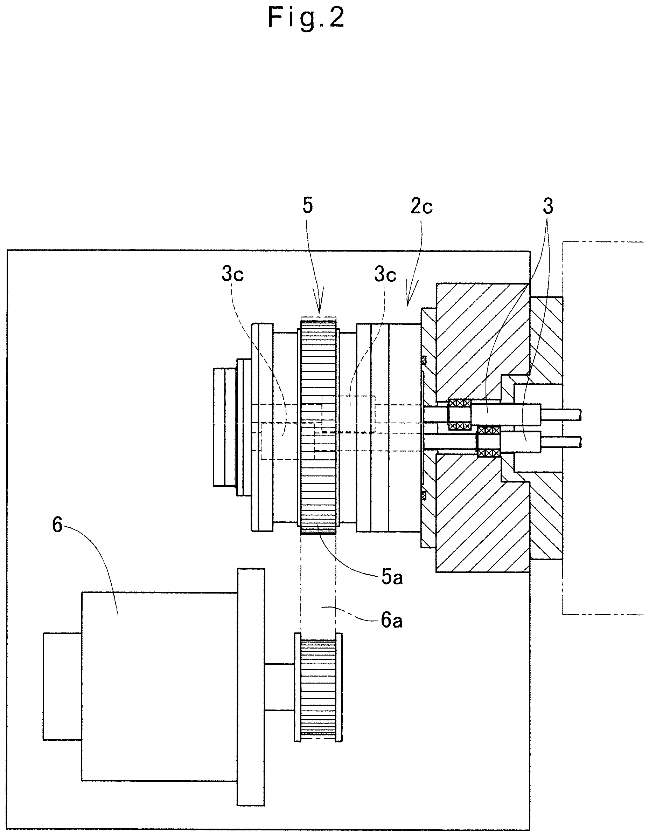

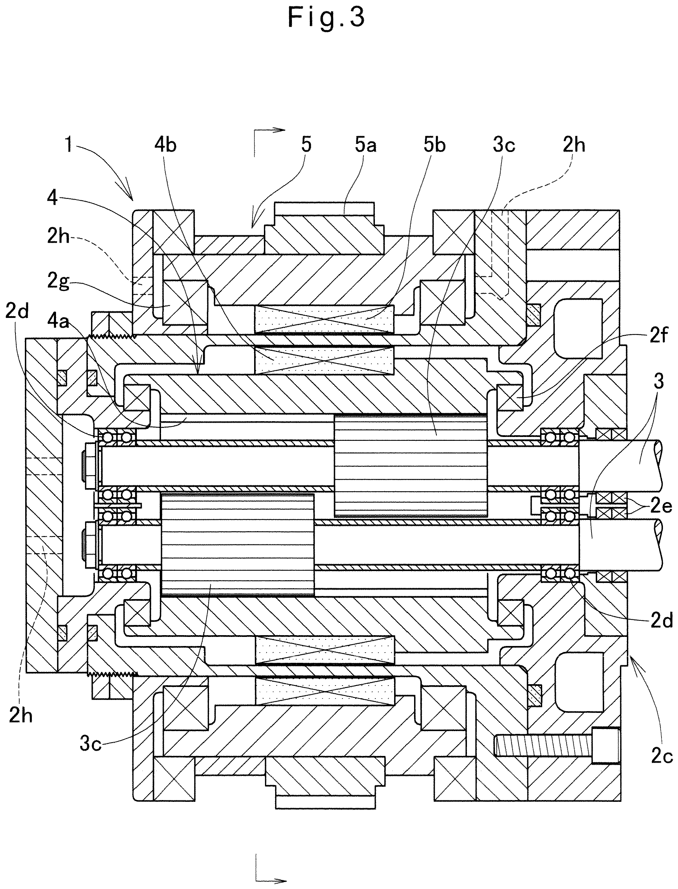

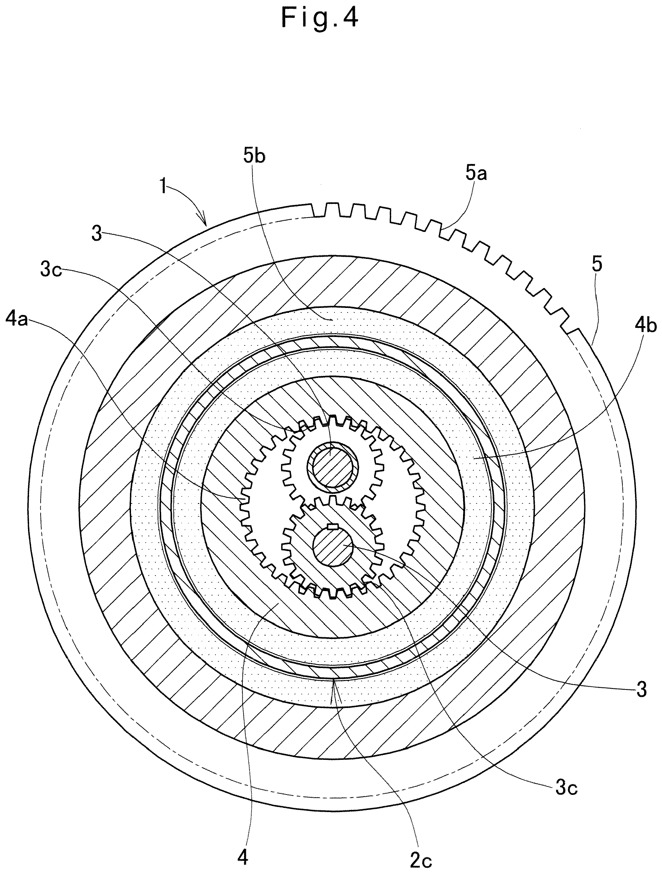

As shown in Figs. 2 to 4, on the axial ends of both shafts 3 enclosed in one of the bearing boxes 2c of the housing 2, gear portions 3c are formed, respectively. Both gear portions 3c are arranged at an interval in the axial direction of the shafts 3 such that they do not interfere with each other.

In this bearing boxe, a cylindrical ring gear 4 is rotatably supported so as to surround the axial ends of the shafts 3. An oil seal 2f is provided between the bearing box 2c and the ring gear 4.

The ring gear 4 has a gear portion 4a on the inner surface thereof which meshes with the gear portions 3c of the respective shafts 3. A permanent magnet is fixed on the inner periphery of the ring gear 4 to form a cylindrical magnet portion 4b.

Further, outside the bearing box 2c, a cylindrical carrier 5 coaxial with the ring gear 4 is rotatably supported.

The carrier 5 has a gear portion 5a on the outer periphery thereof, and a permanent magnet is fixed on the inner periphery of the carrier 5 to form a cylindrical magnet portion 5b. An oil seal 2g is provided between the bearing box 2c and the carrier 5.

As shown in Fig. 2. a timing belt 6a is engaged with the carrier 5 and a motor 6, so that rotation is transferred from the motor 6 to the carrier 5.

In the bearing box 2c, a supply/discharge port 2h for grease and a channel for cooling water are appropriately formed.

With the constitution of the kneading machine of the present embodiment described above, upon rotating the carrier 5 outside the housing 2, the ring gear 4 inside the housing 2 starts to rotate together with the carrier 5 due to the magnetic force between the magnet portion 5b and the magnet portion 4b.

When the ring gear 4 rotates, both shafts 3 start to rotate in the same direction due to the meshing between the gear portion 4a and the gear portions 3c.

Thus, the magnetic coupling mechanism is constituted by the gear portions 3c of the shafts 3 and the ring gear 4, which are located inside the bearing box 2c, and the carrier 5 located outside the bearing box 2c via a wall.

Upon supplying a raw material from the supply port 2a of the housing 2, the raw material is agitated by the paddles 3a rotating integrally with the shafts 3 and is made into a kneaded product. The kneaded product is transferred in the housing 2 to the discharge port 2b by the screws 3b rotating integrally with the shafts 3, and is finally discharged from the discharge port 2b.

Since the shafts 3 are sealed in the housing 2 and since the power is transmitted via a wall using the magnetic coupling mechanism, airtightness is assured by a simple constitution.

Because of the simple constitution, the production cost is reduced and the overall size of the kneading machine 1 is made small when compared with the cases where a mechanical seal or the like is used for assuring airtightness.

Since the size of the machine can be made small, even in cases where the distance between the shafts is restricted within a prescribed range, a special design is not required unlike the cases where a mechanical seal is employed.

Since no management of a sealant is necessary unlike the cases where the mechanical seal is employed, the labor and cost for the maintenance can also be reduced.

### DESCRIPTION OF SYMBOLS

- 1: kneading machine of an embodiment
- 2: housing
- 2a: supply port
- 2b: discharge port
- 2c: bearing box
- 2d: bearing
- 2e, 2f, 2g: oil seal
- 2g: supply/discharge port for grease
- 3: shafts
- 3a: paddles
- 3b: screws
- 3c: gear portions
- 4: ring gear
- 4a: gear portion
- 4b: magnet portion
- 5: carrier
- 5a: gear portion
- 5b: magnet portion
- 6: motor
- 6a: timing belt

## Claims

1. A kneading machine comprising:
a housing (2) in which a supply port (2a) is formed in one of first and second ends with respect to a longitudinal direction of the housing and a discharge port (2b) is formed in the other of the first and second ends; and
a pair of shafts (3) rotatably supported in parallel in the longitudinal direction of said housing and sealed in said housing (2), said shafts having a plurality of paddles (3a) and screws (3b) aligned in axial directions of the respective shafts, on outer peripheries thereof;
**characterized in that**
the kneading machine further comprises a magnetic coupling mechanism which rotates both said shafts (3);
wherein said magnetic coupling mechanism comprises:
gear portions (3c) provided on end portions of the respective shafts (3) so as to be spaced apart from each other in the axial directions;
a cylindrical ring gear (4) rotatably supported in said housing (2) so as to cover the end portions of both said shaft (3), said ring gear (4) having a gear portion (4a) on an inner periphery thereof which meshes with said gear portions (3c) of both said shafts (3), and having a magnet portion (4b) on an outer periphery thereof; and
a cylindrical carrier (5) rotatably supported outside said housing (2) and coaxially with said ring gear (4), said carrier (5) having a magnetic portion (5b) on an inner periphery thereof.

## Patentansprüche

1. Knetmaschine, die umfasst:
ein Gehäuse (2), in dem eine Zuleitöffnung (2a) an einem ersten oder einem zweiten Ende in Bezug auf eine Längsrichtung des Gehäuses ausgebildet ist und eine Ableitöffnung (2b) an dem anderen von dem ersten und dem zweiten Ende ausgebildet ist; und
ein Paar Wellen (3), die drehbar parallel in der Längsrichtung des Gehäuses gelagert und in dem Gehäuse (2) eingeschlossen sind, wobei die Wellen eine Vielzahl von Flügeln (3a) und Schnecken (3b), die in axialen Richtungen der jeweiligen Wellen ausgerichtet sind, am Außenumfang derselben aufweisen;
**dadurch gekennzeichnet, dass**
die Knetmaschine des Weiteren einen magnetischen Kopplungsmechanismus umfasst, der beide der Wellen (3) dreht;
wobei der magnetische Kopplungsmechanismus umfasst:
Zahnradabschnitte (3c), die an Endabschnitten der jeweiligen Wellen (3) so angeordnet sind, dass sie in der axialen Richtung voneinander beabstandet sind;
ein zylindrisches Hohlrad (4), das in dem Gehäuse (2) drehbar so gelagert ist, dass es die Endabschnitte beider der Wellen (3) abdeckt, wobei das Hohlrad (4) einen Zahnradabschnitt (4a) an seinem Innenumfang aufweist, der mit den Zahnradabschnitten (3c) der beiden der Wellen (3) in Eingriff ist, und das einen Magnetabschnitt (4b) an seinem Außenumfang aufweist; sowie
einen zylindrischen Träger (5), der außerhalb des Gehäuses (2) und koaxial zu dem Hohlrad (4) drehbar gelagert ist, wobei der Träger (5) einen magnetischen Abschnitt (5b) an seinem Innenumfang aufweist.

## Revendications

1. Machine à pétrir, comprenant :
un carter (2) dans lequel un orifice d'alimentation (2a) est formé dans l'une d'une première et seconde extrémité par rapport à une direction longitudinale du carter et un orifice de décharge (2b) est formé dans l'autre des première et seconde extrémités ; et
une paire de bras (3) supportés en rotation en parallèle dans la direction longitudinale dudit carter et rendus étanches dans ledit carter (2), lesdits bras ayant une pluralité de pales (3a) et de vis (3b) alignées dans les directions axiales des arbres respectifs, sur leur circonférence extérieure ;
**caractérisée en ce que**
la machine à pétrir comprend, en outre, un mécanisme d'accouplement magnétique qui fait tourner les deux dits arbres (3) ;
dans laquelle ledit mécanisme d'accouplement magnétique comprend :
des parties d'engrenage (3c) situées sur des parties d'extrémité des arbres (3) respectifs de manière à être espacées l'une de l'autre dans les directions axiales ;
une couronne dentée (4) cylindrique supportée en rotation dans ledit carter (2) de manière à couvrir les parties d'extrémité des deux dits arbres (3), ladite couronne dentée (4) présentant sur une circonférence intérieure une partie d'engrenage (4a) qui s'engrène avec lesdites parties d'engrenage (3c) des deux dits arbres (3) et présentant sur une circonférence extérieure une partie d'aimant (4b) ; et
un entraîneur cylindrique (5) supporté en rotation à l'extérieur dudit carter (2) et de manière coaxiale à ladite couronne dentée (4), ledit entraîneur (5) étant pourvu d'une partie magnétique (5b) sur une circonférence intérieure.
